# EUROPÄISCHE PATENTSCHRIFT

(11) **EP 0 640 177 B1**
(45) Veröffentlichungstag und Bekanntmachung des Hinweises auf die Patenterteilung: **03.09.1997**
(21) Anmeldenummer: 93911475.7
(22) Anmeldetag: 16.04.1993
(51) Int. Cl.: F02M 35/12, B29C 49/00

(54) **ANSAUGROHR UND VERFAHREN ZU DESSEN HERSTELLUNG**
SUCTION PIPE AND PROCESS FOR MAKING IT
TUYAU D'ASPIRATION ET PROCEDE POUR SA FABRICATION

(30) Priorität: 16.05.1992 DE 4216255
(43) Veröffentlichungstag der Anmeldung: 01.03.1995
(73) Patentinhaber: FILTERWERK MANN & HUMMEL GmbH, D-71638 Ludwigsburg (DE)
(72) Erfinder: ANDRESS, Heinz, D-7141 Erdmannhausen (DE); ERNST, Volker, D-7123 Sachsenheim 1 (DE); FÜSSER, Rolf, D-7121 Ingersheim 2 (DE); KLOTZ, Arthur, D-7148 Remseck 5 (DE); LEIPELT, Rudolf, D-7142 Marbach (DE)
(86) Internationale Anmeldenummer: EP9300925
(87) Internationale Veröffentlichungsnummer: WO9323666

(56) Entgegenhaltungen:
- EP-A- 0 379 926
- DE-A- 2 205 220
- DE-U- 1 669 265
- FR-A- 2 171 228
- FR-A- 2 209 405
- PATENT ABSTRACTS OF JAPAN vol. 016, no. 145 (M-1233) 10. April 1992 & JP-A-40 04 123 (TOYODA GOSEI)
- PATENT ABSTRACTS OF JAPAN vol. 008, no. 238 (M-335) 31. Oktober 1984 & JP-A-59 118 435 (TOYO KOGYO) 9. Juli 1984
- PATENT ABSTRACTS OF JAPAN vol. 8, no. 152 (M-309)(1589) 14. Juli 1984 & JP-A-59 049 361 (NIPPON DENSO)
- PATENT ABSTRACTS OF JAPAN vol. 11, no. 14 (M-553)(2461) 14. Januar 1987 & JP-A-61 190 158 (HONDA MOTOR)

## Beschreibung

Die Erfindung bezieht sich auf ein Ansaugrohr und ein Verfahren zu dessen Herstellung nach dem Oberbegriff des Anspruchs 1 oder des Anspruchs 7.

Aus der DE-OS 38 38 921 ist ein thermoplastisches Ansaugrohr bekannt. Dieses Ansaugrohr wird nach dem sogenannten Kernausschmelzverfahren hergestellt, das heißt, zunächst wird ein Kern aus einer Zinn-Wismut-Legierung mit niedrigem Schmelzpunkt hergestellt. Dieser wird in eine Form eingesetzt. Ein verbleibender Zwischenraum zwischen der Form und dem Kern wird im Spritzgießverfahren mit thermoplastischem Kunststoff ausgefüllt. Anschließend erfolgt das Ausschmelzen des Kern innerhalb eines Ausschmelzbads.

Es ist weiterhin aus der japanischen Patentoffenlegung 1-216067 ein Verfahren zum Herstellen eines Saugroh'res aus Kunststoff bekannt, wobei zunächst zwei Flanschteile aus thermoplastischem Kunststoff gespritzt, anschließend ein Zweigrohrteil aus thermoplastischem Kunststoff durch Blasen geformt und die Flanschteile und das Rohrteil miteinander verbunden werden.

Ein Nachteil der bekannten Verfahren ist darin zu sehen, daß mehrere Arbeitsschritte notwendig sind, um das Motorsaugrohr herzustellen. Während bei der Ausschmelztechnik das Herstellen und Ausschmelzen des Kerns erhebliche Anlageinvestitionen erfordert, ist bei dem Herstellungsverfahren gemäß der japanischen Patentoffenlegung 1-216067 die getrennte Herstellung der einzelnen Elemente und das Zusammenfügen der einzelnen Elemente auch bezüglich der Paßgenauigkeiten nicht ganz unproblematisch.

Der Erfindung liegt die Aufgabe zugrunde, ein Ansaugrohr zu schaffen und ein Herstellungsverfahren für dieses anzugeben, wobei die Fertigung einfach und ohne hohen Werkzeugaufwand durchführbar ist.

Diese Aufgabe wird ausgehend von den Oberbegriffen der Hauptansprüche durch deren kennzeichnende Merkmale gelöst.

Das erfindungsgemäße Verfahren zeichnet sich dadurch aus, daß die einzelnen Saugrohre und das die Saugrohre eingangsseitig verbindende Sammelrohr einstückig geformt werden. Ein wesentlicher Vorteil der Erfindung ist darin zu sehen, daß in einem einzigen Verfahrensschritt das Ansaugrohr hergestellt werden kann und Übergangs- oder Nahtstellen zwischen Ansaugrohr und Sammelrohr nicht vorhanden sind. Damit wird ein ausgeformtes Ansaugrohr geschaffen, das sehr günstige Strömungseigenschaften aufweist.

Ferner ist vorgesehen, einen Nebenschlußresonator gleichzeitig an das Ansaugrohr anzuformen. Ein solcher Nebenschlußresonator dient dazu, die Schallabstrahlung zu reduzieren und besteht aus einem Hohlraum, der mit einer kleinen Öffnung mit dem Sammelrohr in Verbindung steht. Zweckmäßigerweise läßt sich ein solcher Nebenschlußresonator in dem Raum zwischen zwei Saugrohren integrieren. Somit läßt sich dieser Zwischenraum in günstiger Weise nutzen, während die äußeren Abmessungen des Ansaugrohrs unverändert bleiben.

Gemäß einer weiteren Ausgestaltung der Erfindung ist das Ansaugrohr unmittelbar an einem Luftfiltergehäuse befestigt. Eine einfache Befestigungmethode ist das Vorsehen von Steckverbindungen, beispielsweise in Form von Flanschstücken, die an dem Ansaugrohr angeordnet sind und in Ausnehmungen des Filtergehäuses eingreifen.

Es besteht weiterhin die Möglichkeit, im Luftfiltergehäuse einen Nebenschlußresonator vorzusehen. Dieser Nebenschlußresonator kann über eine Öffnung mit dem Sammelrohr oder mit dem Reinluftraum des Luftfiltergehäuses verbunden sein. Entscheidend ist bei einem Nebenschlußresonator die schallquellennahe Anordnung derselben. Diese ist durch die reinluftseitige Anbindung des Nebenschlußresonators gewährleistet.

Gemäß einer weiteren Ausgestaltung der Erfindung kann im Sammelrohr ein sogenannter Resonator angeordnet sein. Dies ist ein kurzes Rohrstück, das eine Auslöschung von Schallwellen einer bestimmten Frequenz bewirkt. Die Länge des Rohrstücks ist auf die Schallwellen abzustimmen und beträgt Lambda/4.

Zum Anschluß der Saugrohre an den Motorblock können in vorteilhafter Weise Anschlußflansche vorgesehen werden, die über eine Steck- oder Schweißverbindung mit den Saugrohren verbunden sind. Die Verbindung zwischen Reinluftausgang des Luftfilters und Eingang des Sammelrohrs ist geeignet, um einen Luftmassen- oder Luftmengenmesser und/oder eine Drosselklappe anzuordnen. In diese Verbindung können die genannten Elemente als komplettes Modul eingebaut werden.

Diese und weitere Merkmale von bevorzugten Weiterbildungen der Erfindung gehen aus den Ansprüchen hervor. Ausführungsbeispiele der Erfindung sind in den Zeichnungen dargestellt und werden im folgenden näher erläutert. Es zeigen:
- Figur 1: eine Schnittdarstellung eines Ansaugrohrs,
- Figur 2: eine Draufsicht auf das in Figur 1 gezeigte Ansaugrohr,
- Figur 3: eine Schnittdarstellung eines Ansaugrohrs mit Luftfilter,
- Figur 4: eine Draufsicht auf das in Figur 3 gezeigte System Ansaugrohrluftfilter.

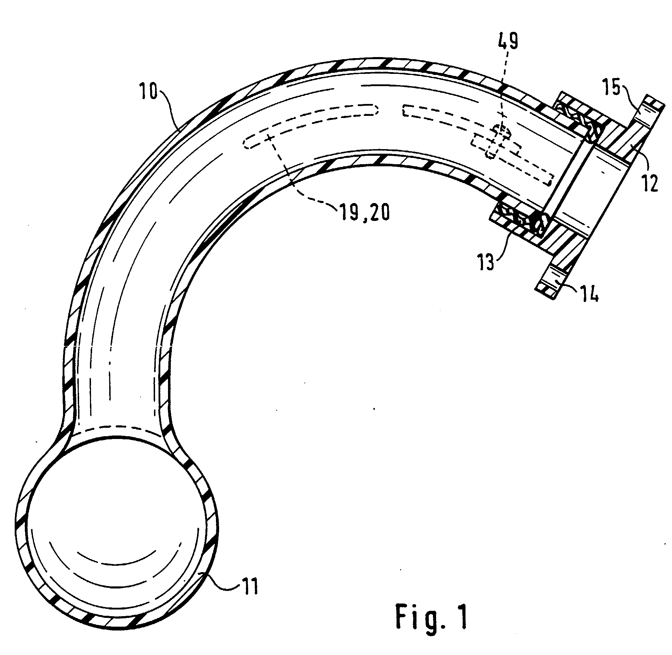

Die Schnittdarstellung gemäß Figur 1 zeigt ein Ansaugrohr bestehend aus Saugrohr 10 und Sammelrohr 11. Saugrohr und Sammelrohr sind einstückig ausgebildet und in Blasformtechnik hergestellt. An dem Saugrohr 10 befindet sich im Luftauslaßbereich ein Flansch 12. Dieser Flansch ist über das Saugrohr 10 geschoben und mit dem Saugrohr mittels der Schraubverbindung 49 verschraubt. Eine Abdichtung zwischen Flansch 12 und Saugrohr 10 erfolgt mittels einer wellenförmig ausgestalteten Dichtung 13, die sowohl radial als auch axial dichtet. Der Flansch 12 ist mit Bohrungen 14, 15 versehen zur Aufnahme von Schraubverbindungselementen. Über diesen Flansch 12 wird das Ansaugrohr an einem Zylinderkopf eines Verbrennungsmotors angeschraubt.

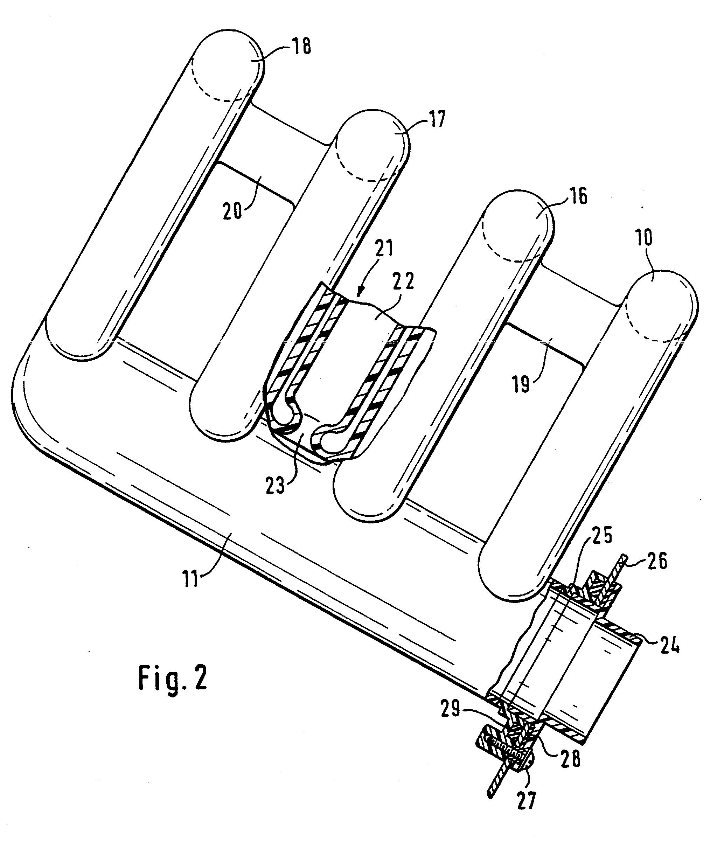

In Figur 2 ist das Ansaugrohr in einer Draufsichtdarstellung gezeigt. Hier ist das Sammelrohr 11 mit vier daran angeformten Saugrohren 10, 16, 17, 18 erkennbar. Die benachbart liegenden Saugrohre 10, 16 und 17, 18 sind jeweils mit einem Verbindungssteg 19, 20 ausgestattet. Diese erhöhen die Steifigkeit des gesamten Systems und werden gleichzeitig mitbenutzt zum Verschrauben der Saugrohre mit den beiden Doppelflanschen über die Schraubverbindung 49.

Zwischen den Saugrohren 16, 17 befindet sich ein sogenannter Nebenschlußresonator 21. Dieser besteht aus einem Hohlraum 22, der seitlich von den Wandungen der Saugrohre 16, 17 begrenzt wird. Zu dem Sammelrohr 11 ist eine Öffnung 23 vorgesehen. Über diese Öffnung steht der Hohlraum des Nebenschlußresonators 21 mit dem Raum des Sammelrohres 11 in Wirkverbindung. Der Nebenschlußresonator dient zum Dämpfen bestimmter Frequenzen des Ansauggeräuschs und gleichzeitig zur Versteifung zwischen den beiden benachbart liegenden Saugrohren.

An der Lufteintrittsöffnung des Sammelrohrs befindet sich ein Anschlußflansch 24. Zwischen Anschlußflansch 24 und der Sammelrohröffnung 25 ist eine Trägerplatte 26 angeordnet. Über Schrauben 27 wird der Anschlußflansch 24 mit der Sammelrohröffnung 25 verbunden und gleichzeitig an der Trägerplatte 26 fixiert. Es sind ferner Dichtungen 28, 29 vorgesehen, die einen Fremdlufteintritt in das Saugsystem verhindern.

Selbstverständlich besteht die Möglichkeit, den Nebenschlußresonator 21 auch zwischen den Saugrohren 10, 16 oder zwischen den Saugrohren 17, 18 anzuordnen. Es besteht ferner die Möglichkeit, mehrere Nebenschlußresonatoren vorzusehen. Wegen der einfachen Herstellung des Ansaugrohres mittels der Blasformtechnik ist die Anordnung solcher Nebenschlußresonatoren in beliebiger Ausführung gestaltbar.

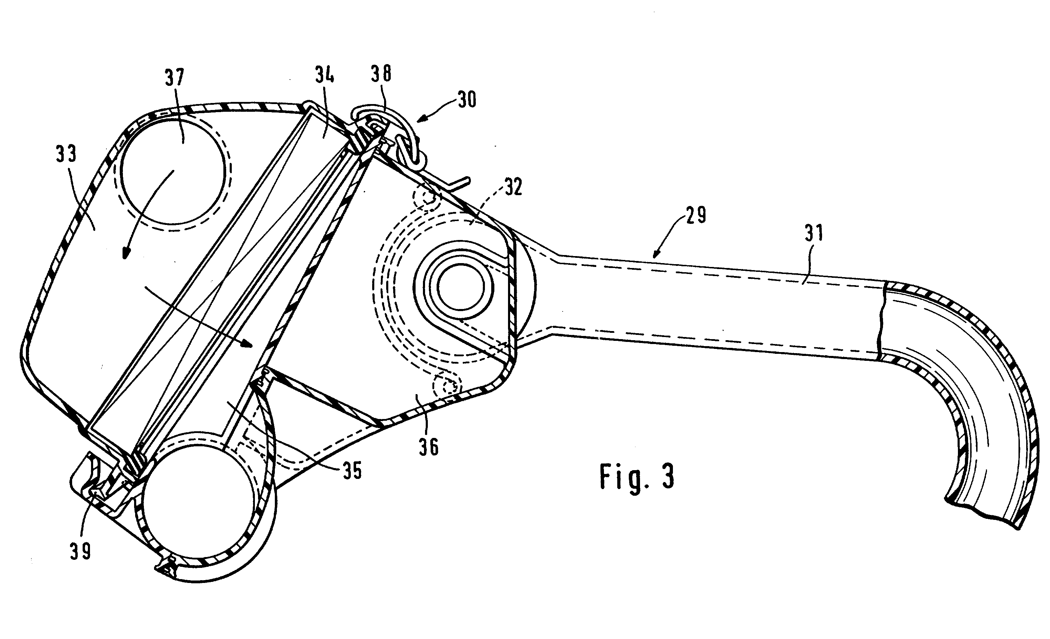

Das in Figur 3 gezeigte Ansaugrohr 29 ist teilweise in das Filtersystem 30 integriert. Das Ansaugrohr 29 besteht ebenfalls aus vier Saugrohren - von denen das Saugrohr 31 sichtbar ist - sowie dem Sammelrohr 32. Das Sammelrohr 32 ist in einer Aussparung des Filtersystems 30 angeordnet. Der Funktionszusammenhang zwischen Sammelrohr 32 und Filtersystem wird weiter unten näher erläutert.

Das Filtersystem 30 besteht aus einem Rohluftraum 33, einer Filterpatrone 34, einem Reinluftraum 35 sowie einem Nebenschlußresonator 36. Die zu filtrierende Luft strömt über die Öffnung 37 in den Rohluftraum, wird über die Filterpatrone 34 gefiltert und gelangt in den Reinluftraum 35. Die Filterpatrone 34 ist in einer Aufnahme des Rohluftraums angeordnet. Das Filtersystem besteht im wesentlichen aus zwei Gehäuseteilen, die eine Schnittstelle an der Filterpatrone 34 aufweisen. Mittels Steckscharnier 39 und Schnappverschluß 38 lassen sich die beiden Gehäuseteile des Filtersystems 30 miteinander verbinden.

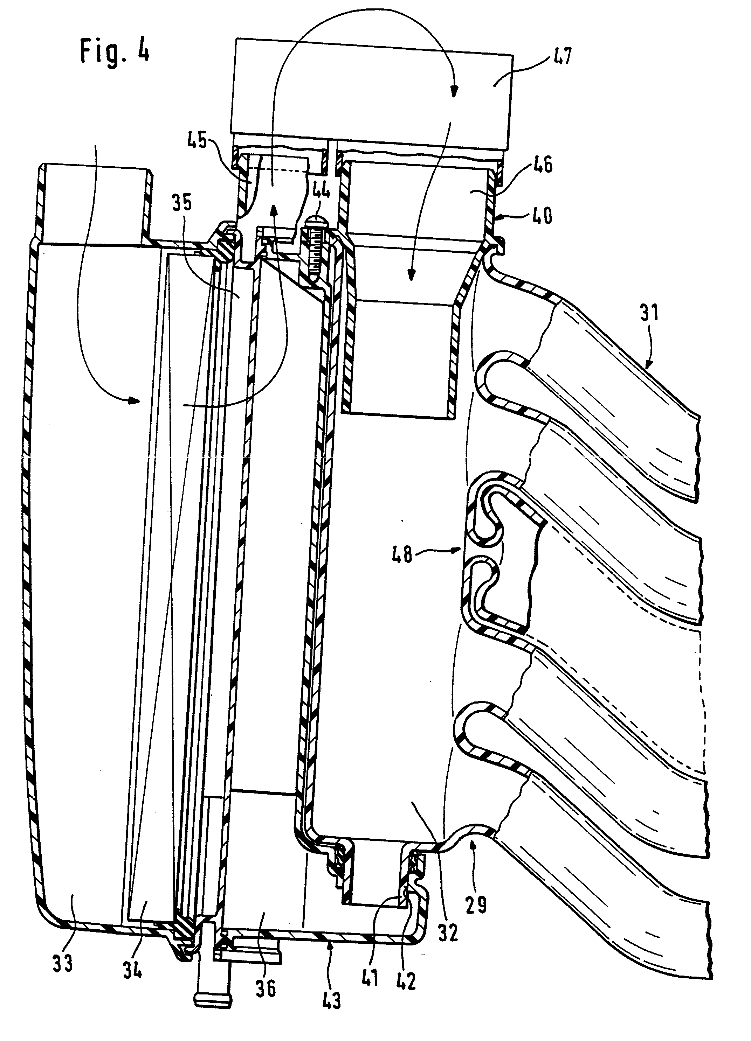

Eine Draufsicht auf das System gemäß Figur 3 zeigt die Figur 4. Im Sammelrohr 32 des Ansaugrohrs 29 befindet sich ein Resonator 40. Dieser kann aus einem eingesetzten Rohrstück bestehen, das mit der Wandung des Sammelrohrs verschweißt oder verklebt ist. Das Sammelrohr 32 besitzt an einem Ende einen Flanschansatz 41. Dieser Flanschansatz wird in einer Öffnung 42 des Filtergehäuses 43 befestigt. Die gegenüberliegende Befestigung erfolgt mittels einer Schraubverbindung 44.

Der Flanschansatz 41 ist offen und führt in einen abgeschlossenen Hohlraum innerhalb des Filtergehäuses 43. Dieser abgeschlossene Hohlraum bildet den Nebenschlußresonator 36. In dem Sammelrohr 32 ist zusätzlich oder alternativ ein Resonator 40 angeordnet. Dieser Resonator 40 besteht aus einer Hülse, die mit dem Sammelrohr verschweißt oder verklebt ist. Zwischen der Luftaustrittsöffnung 45 des Reinluftraums 35 und der Lufteintrittsöffnung 46 des Sammelrohrs befindet sich eine hier nur schematisch dargestellte Drosselklappe 47 bzw. ein Luftmengen- oder Luftmassensensor. Selbstverständlich kann auch eine Verbindung dieser beiden Öffnungen ohne zusätzliche Elemente vorgenommen werden, beispielsweise könnte die Drosselklappe auch in dem Eingangsbereich der Lufteintrittsöffnung 46 angeordnet sein.

Die Saugrohre 31 sind paarweise angeordnet. Zwischen den beiden mittleren Saugrohren kann alternativ wie in Figur 1 gezeigt ein weiterer Nebenschlußresonator angeordnet werden. Dieser ist gestrichelt dargestellt (Nebenschlußresonator 48).

### Bezugszeichenliste

- 10: Saugrohr
- 11: Sammelrohr
- 12: Flansch
- 13: Dichtung
- 14: Bohrung
- 15: Bohrung
- 16: Saugrohr
- 17: Saugrohr
- 18: Saugrohr
- 19: Verbindungssteg
- 20: Verbindungssteg
- 21: Nebenschlußresonator
- 22: Hohlraum
- 23: Öffnung
- 24: Anschlußflansch
- 25: Sammelrohröffnung
- 26: Trägerplatte
- 27: Schraube
- 28: Dichtung
- 29: Ansaugrohr
- 30: Filtersystem
- 31: Saugrohr
- 32: Sammelrohr
- 33: Rohluftraum
- 34: Filterpatrone
- 35: Reinluftraum
- 36: Nebenschlußresonator
- 37: Öffnung
- 38: Schnappverschlüsse
- 39: Steckscharnier
- 40: Resonator
- 41: Flanschansatz
- 42: Öffnung
- 43: Filtergehäuse
- 44: Schraubverbindung
- 45: Luftaustrittsöffnung
- 46: Lufteintrittsöffnung
- 47: Drosselklappe
- 48: Nebenschlußresonator
- 49: Schraubverbindung

## Patentansprüche

1. Ansaugrohr mit einer Anzahl von einzelnen Saugrohren und einem die Saugrohre eingangsseitig verbindenden Sammelrohr, wobei das Sammelrohr (11) mit den Saugrohren (10, 16, 17, 18) einstückig ausgebildet ist und in Blasformtechnik hergestellt ist, dadurch gekennzeichnet, daß ein Nebenschlußresonator (21) als weiteres Element vorgesehen ist und sich dieser Nebenschlußresonator zwischen zwei benachbart liegenden Saugrohren (16, 17) befindet, wobei Sammelrohr, Saugrohr und Nebenschlußresonator eine einstückige, geblasene Form aufweisen.

2. Ansaugrohr nach Anspruch 1, dadurch gekennzeichnet, daß das Sammelrohr (11) mittels Steck- und/oder Schraubverbindung an einem Luftfiltergehäuse (43) angeordnet ist.

3. Ansaugrohr nach Anspruch 2, dadurch gekennzeichnet, daß in dem Luftfiltergehäuse (43) ein Nebenschlußresonator (36) vorgesehen ist und dieser Nebenschlußresonator mit dem Sammelrohr (32) des Ansaugrohrs über eine Öffnung (42) in Verbindung steht.

4. Ansaugrohr nach einem der vorhergehenden Ansprüche, dadurch gekennzeichnet, daß im Sammelrohr (32) ein Resonator (40) angeordnet ist, dessen Länge Lambda/4 entspricht.

5. Ansaugrohr nach einem der vorhergehenden Ansprüche, dadurch gekennzeichnet, daß an den motornahen Enden der Saugrohre (10, 16, 17, 18) jeweils ein Anschlußflansch (12) angeordnet ist, wobei jeder Anschlußflansch mittels einer Steck- oder Schweißverbindung mit dem Saugrohr verbunden ist.

6. Ansaugrohr nach einem der vorhergehenden Ansprüche, dadurch gekennzeichnet, daß das Sammelrohr (11) auf der der Eingangsseite der Saugrohre (10, 16, 17, 18) gegenüberliegenden Seite offen ist, wobei die offene Seite des Sammelrohrs mit einem Deckelelement verschlossen ist.

7. Verfahren zum Herstellen eines Ansaugrohrs aus Kunststoff mittels Blasformtechnik, dadurch gekennzeichnet, daß die einzelnen Saugrohre (10, 16, 17, 18) und das die Saugrohre eingangsseitig verbindende Sammelrohr (11) einstückig geformt werden, wobei ein Nebenschlußresonator (21) an das Ansaugrohr angeformt wird und sich dieser Nebenschlußresonator (21) zwischen zwei Saugrohren befindet und mit einer Öffnung (23) versehen ist, welche in das Sammelrohr (11) mündet.

8. Verfahren nach Anspruch 7, dadurch gekennzeichnet, daß in das Sammelrohr (32) ein zusätzliches Resonatorstück (40) eingesetzt wird, dessen Länge Lambda/4 beträgt.

## Claims

1. Suction pipe with a number of individual suction pipes and a manifold pipe, which connects the suction pipes at the inlet side, the manifold pipe (11) being formed intregrally with the suction pipes (10, 16, 17, 18) and being produced by the blow moulding technique, characterised in that a bypass resonator (21) is provided as an additional member, and this bypass resonator is situated between two adjacently disposed suction pipes (16, 17); the manifold pipe, suction pipe and bypass resonator having an integral, blown form.

2. Suction pipe according to claim 1, characterised in that the manifold pipe (11) is disposed on an air filter housing (43) by means of a plug-in and/or screw connection.

3. Suction pipe according to claim 2, characterised in that a bypass resonator (36) is provided in the air filter housing (43), and this bypass resonator communicates with the manifold pipe (32) of the suction pipe via an aperture (42).

4. Suction pipe according to one of the preceding claims, characterised in that a resonator (40) is disposed in the manifold pipe (32), the length of said resonator corresponding to Lamda/4.

5. Suction pipe according to one of the preceding claims, characterised in that a connecting flange (12) is disposed on each of the ends of the suction pipes (10, 16, 17, 18) close to the engine, each connecting flange being connected to the suction pipe by means of a plug-in connection or welded joint.

6. Suction pipe according to one of the preceding claims, characterised in that the manifold pipe (11) is open on the side situated opposite the inlet side of the suction pipes (10, 16, 17, 18), the open side of the manifold pipe being sealed by a cover member.

7. Method of producing a suction pipe from plastics material by means of the blow moulding technique, characterised in that the individual suction pipes (10, 16, 17, 18) and the manifold pipe (11), which connects the suction pipes at the inlet side, are integrally formed, a bypass resonator (21) being shaped to fit on the suction pipe, and this bypass resonator (21) being situated between two suction pipes and being provided with an aperture (23), which terminates in the manifold pipe (11).

8. Method according to claim 7, characterised in that an additional resonator member (40) is inserted into the manifold pipe (32), the length of said member being Lambda/4.

## Revendications

1. Tubulure d'aspiration constituée de plusieurs tubes individuels d'aspiration et d'un tube collecteur (11) les reliant vers leurs entrées, ce collecteur (11) et les tubes individuels (10, 16, 17, 18) étant réalisés en une seule pièce moulée selon la technique du soufflage,
caractérisée en ce qu'
il est prévu un élément supplémentaire constitué par un résonateur en dérivation (21), monté entre deux tubes individuels (16, 17) voisins, le tube collecteur, les tubes d'aspiration et le résonateur constituant ensemble une seule pièce moulée par soufflage.

2. Tubulure d'aspiration selon la revendication 1,
caractérisée en ce que
le tube collecteur (11) est monté sur un boîtier de filtre à air (43) par une liaison à emmanchement et/ou à vis.

3. Tubulure d'aspiration selon la revendication 2,
caractérisée en ce que
dans le boîtier de filtre à air (43) se trouve un résonateur en dérivation (36) relié au tube collecteur (32) de la tubulure d'aspiration par une ouverture (42).

4. Tubulure d'aspiration selon une des revendications précédentes,
caractérisée en ce que
le tube collecteur (32) contient un résonateur (40) dont la longueur est égale à un quart de la longueur d'onde lambda.

5. Tubulure d'aspiration selon une des revendications précédentes,
caractérisée en ce que
les tubes d'aspiration (10, 16, 17, 18), à leurs extrémités situées près du moteur, portent chacun une bride de raccordement (12) reliée au tube d'aspiration par une liaison à emboîtement ou soudée.

6. Tubulure d'aspiration selon une des revendications précédentes,
caractérisée en ce que
le tube collecteur (11) est ouvert du côté opposé aux entrées des tubes d'aspiration (10, 16, 17, 18), cette ouverture étant obturée par un couvercle.

7. Procédé de fabrication d'une tubulure d'aspiration en matière plastique, selon la technique du moulage par soufflage,
caractérisé en ce que
les tubes individuels d'aspiration (10, 16, 17, 18) et le tube collecteur (11) qui les relie du côté entrée, sont moulés d'une seule pièce, un résonateur en dérivation (21) étant également moulé sur la tubulure d'aspiration, entre deux tubes d'aspiration, avec une ouverture (23) débouchant dans le tube collecteur (11).

8. Procédé selon la revendication 7,
caractérisé en ce que
dans le tube collecteur (32) est introduit un résonateur supplémentaire (40) dont la longueur est égale au quart de la longueur d'onde lambda.
